# EUROPÄISCHE PATENTSCHRIFT

(11) **EP 0 755 188 B1**
(45) Veröffentlichungstag und Bekanntmachung des Hinweises auf die Patenterteilung: **27.05.1998**
(21) Anmeldenummer: 95914330.6
(22) Anmeldetag: 29.03.1995
(51) Int. Cl.: A22C 11/02

(54) **VERFAHREN UND VORRICHTUNG ZUM KONTROLLIEREN DES FÜLLVORGANGS BEIM FÜLLEN VON VERPACKUNGEN**
PROCESS AND DEVICE FOR CONTROLLING THE FILLING PROCESS WHEN FILLING PACKAGING CONTAINERS
PROCEDE ET DISPOSITIF PERMETTANT DE CONTROLER LE REMPLISSAGE DE SACHETS D'EMBALLAGE

(30) Priorität: 13.04.1994 DE 4412697
(43) Veröffentlichungstag der Anmeldung: 29.01.1997
(73) Patentinhaber: Poly-clip System GmbH & Co. KG, 60489 Frankfurt am Main (DE)
(72) Erfinder: Jahns, Rolf, D-61449 Steinbach (DE)
(74) Vertreter: Fischer, Ernst, Dr.
(86) Internationale Anmeldenummer: EP9501185
(87) Internationale Veröffentlichungsnummer: WO9528089

(56) Entgegenhaltungen:
- EP-A- 0 121 761
- EP-A- 0 141 910
- EP-A- 0 568 372
- DE-A- 2 249 070
- DE-A- 3 600 818
- DE-A- 3 608 983
- DE-U- 9 001 076
- GB-A- 2 050 801

## Beschreibung

Die Erfindung betrifft ein Verfahren und eine Vorrichtung zum Kontrollieren des Füllvorgangs beim Füllen von schlauchartigen Verpackungshüllen mit pastösem Füllgut.

Beim Füllen von schlauchartigen Verpackungshüllen aus plastischem Material mit pastösem Füllgut, z. B. von Würsten mit Wurstbrät oder Dichtstoffen, wird die mit einem Clip-Verschluß versehene Verpackungshülle von einem Füllrohr durch den Druck des Füllgutes abgezogen.

Das Füllgut wird von einer Füllmaschine in die am Ende verchlossene Verpackungshülle gepreßt. Das Material der Verpackungshülle kann aus einem kontinuierlich abgezogenen Folienmaterial oder aus Einzelabschnitten bestehen. Nach Abschluß des Füllvorgangs wird die gefüllte Verpackungshülle am anderen Ende verschlossen.

Während des Füllvorgangs kann eine Störung dadurch entstehen, daß die teilweise gefüllte Verpackungshülle platzt oder der Endverschluß durch den Fülldruck abspringt. Die Füllmaschine stößt aber das eingestellte Gewicht des Füllgutes aus, so daß die Wurstmasse in die Verschließmaschine fällt. Sie darf dem Produktionsvorgang nicht mehr zugeführt werden. In diesem Augenblick muß daher die Füllmaschine durch eine Überwachungsperson abgeschaltet werden, um zu vermeiden, daß weiteres Füllgut unkontrolliert austritt und damit verlorengeht. Außerdem ist infolge der Menge, die bis zum manuellen Abstellen der Füllmaschine austritt, eine aufwendige Reinigung notwendig. Bei einer Taktzahl von 120 Würsten/min fallen z. B. in einer Sekunde schon der Inhalt von zwei Würsten und die Verschlußclips in die Verschließmaschine. Der Zeitaufwand für die Reinigung ist besonders bei der Verarbeitung von Dichtstoffen sehr groß.

Es ist zwar aus DE 36 00 818 U1 bekannt, durch eine Überwachungsvorrichtung festzustellen, wenn das Schlauchmaterial für die Verpackungshülle verbraucht ist, und infolge dieser Feststellung die Füllmaschine abzustellen. Die vorstehend geschilderten Nachteile beim Platzen der Verpackungshülle werden dadurch aber nicht vermieden.

Um diese Nachteile dennoch zu vermeiden, ist es wünschenswert, daß eine automatische Überwachung des Füllvorgangs vorhanden ist, die bei einem Platzen der teilweise gefüllten Verpackungshülle den Füllvorgang unterbricht.

Diese Aufgabe wird erfindungsgemäß durch die im Patentanspruch 1 genannten Maßnahmen gelöst. Dabei wird durch einen Impulsgeber, der die Geschwindigkeit der Verpackungshülle erfaßt, bei einem Verpackungshüllen-Stillstand die Füllmaschine abgeschaltet. Falls die Verpackungshülle platzt oder der Clip durch den Fülldruck abgeschoben wird, bewegt sich also die Verpackungshülle beim Füllvorgang nicht weiter, weil kein Füllgut nachdrückt. Der Füllvorgang wird also dadurch unterbrochen, daß die Füllmaschine keine ausreichende Füllmasse nachliefert und daher die Verpackungshülle zum Stillstand kommt.

Durch das erfindungsgemäße Verfahren wird erreicht, daß bei einem solchen Vorfall die Füllmaschine in ca. 0,1 bis 0,2 Sekunden abgestellt wird und damit nur eine geringe Menge Füllgut unkontrolliert austritt.

Die Vorrichtung zur Durchführung des Verfahrens sieht im Endbereich des Füllrohrs eine Entraffungsscheibe vor und nach dieser ein Rad, das auf der Hülle aufliegt und durch den Vorschub der Hülle gedreht wird, wobei durch die Drehbewegung des Rades der Impulsgeber erregt wird. Solche Abtasträder sind an sich aus GB-OS 20 87 338 A und DE 31 38 685 A 1 bekannt, auch zum Messen des Vorhandenseins oder Fehlens der Verpackungsfolie (GB-OS 20 87 338). Sie sind aber nicht dafür vorgesehen worden, beim Stillstand der Verpackungshülle während des Füllvorgangs als Impulsgeber die Füllmaschine abzuschalten. Anstelle des Abtastrades kann auch eine Lichtschranke zur Geschwindigkeitsermittlung Markierungen auf der Verpackungshülle abtasten. Solche Markierungen sind bekannt (DE 94 00 771 U 1), um durch Abtasten den Verschließvorgang auszulösen, jedoch sind sie nicht als Impulsgeber bei Verpackungshüllen-Stillstand verwendet worden.

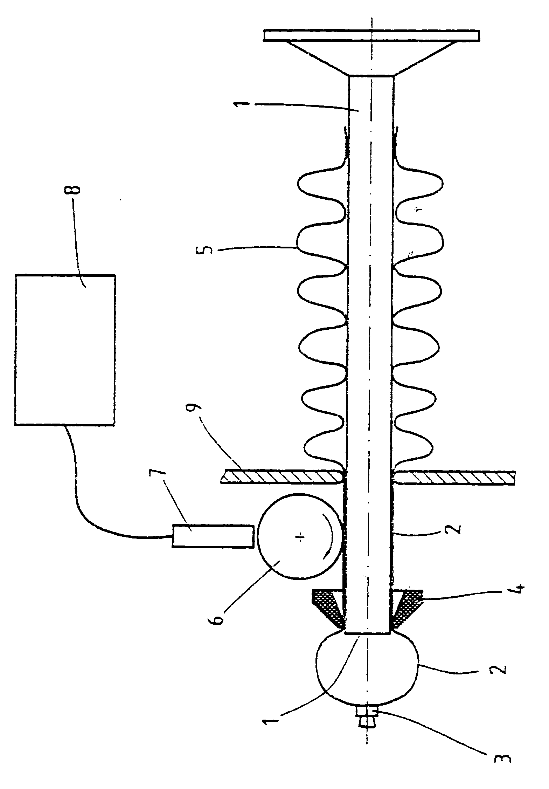

Die Einzelheiten der Erfindung werden in der Abbildung beschrieben.

Die Figur zeigt ein Füllrohr einer Wurstfüll- und -verschließmaschine mit einem Zählrad als Kontrolle der Geschwindigkeit der Verpackungshülle während des Füllvorganges.

Durch ein Füllrohr (1), das mit einer nicht gezeigten Füllmaschine verbunden ist, wird Wurstmasse in eine Verpackungshülle (2) gepreßt. Die Verpackungshülle ist an ihrem vorderen Ende mit einem Clip (3) verschlossen. Die Verpackungshülle wird infolge des Fülldrucks durch eine Bremseinrichtung (4) von einem Darmvorrat (5) abgezogen. Ein Zählrad (6), das auf der Verpackungshülle aufliegt, wird von ihr in Drehungen versetzt. Das Zählrad (6) gibt Impulse an einen Aufnehmer (7), der diese Impulse an eine Auswerte-Einheit (8) weitergibt.

Die Auswerte-Einheit (8) schaltet die Füllmaschine und die Verschließmaschine aus, wenn die Verpackungshülle (2) während des Ausstoßes des Füllgutes durch die Füllmaschine nicht abgezogen wird, also zum Stillstand kommt, z.B. weil sie zwischen Füllrohr (1) und Verschluß (3) geplatzt ist. Damit die Verpackungshülle (2) für den Kontakt mit dem Zählrad (6) möglichst eng an dem Füllrohr (1) anliegt, ist eine Entraffungsscheibe (9) vorgesehen.

## Patentansprüche

1. Verfahren zum Kontrollieren des Füllvorgangs beim Füllen von schlauchförmigen Verpackungshüllen mit pastösem Füllgut, wobei die zu füllende einseitig verschlossene Verpackungshülle durch den an einer Füllmaschine erzeugten Fülldruck von einem Füllrohr abgezogen wird, und wobei bei fehlender Verpackungshülle während des Füllvorgangs durch einen im ablaufseitigen Endbereich des Füllrohres mit der Verpackungshülle in Berührung stehenden Impulsgeber die Füllmaschine abgeschaltet wird,
**dadurch gekennzeichnet,**
daß der Impulsgeber die Geschwindigkeit der Verpackungshülle erfaßt und daß auch bei Verpackungshüllen-Stillstand die Füllmaschine abgeschaltet wird.

2. Vorrichtung zur Durchführung des Verfahrens nach Anspruch 1, mit einem Füllrohr (1), mit einer darauf angeordneten gerafften schlauchförmigen Verpackungshülle (2), mit einer Einrichtung zur Erzeugung eines Fülldruckes im Füllrohr und mit einem Impulsgeber im ablaufseitigen Endbereich des Füllrohres (1), der mit der Verpackungshülle (2) in Verbindung steht und die Füllmaschine bei fehlender Verpackungshülle abschaltet,
gekennzeichnet durch eine Entraffungsscheibe (9) im Endbereich des Füllrohres sowie durch ein in Ausstoßrichtung hinter der Entraffungsscheibe angeordnetes Rad (6), das auf der Hülle aufliegt und durch den Vorschub der Hülle (2) gedreht wird und bei Verpackungshüllen-Stillstand über einen Impuls an den Impulsnehmer (7) die Füllmaschine abschaltet.

3. Vorrichtung nach dem Oberbegriff von Anspruch 2
gekennzeichnet durch eine Lichtschranke, mit der Markierungen auf der Verpackungshülle (2) abgetastet werden und die bei fehlender Fortbewegung der Markierungen über einen Impuls die Füllmaschine abschaltet.

## Claims

1. A process of monitoring the filling operation when filling tubular packaging sheaths with pasty filling material, wherein the packaging sheath to be filled, which is closed at one end, is pulled from a filling tube under the filling pressure generated by a filling machine, and wherein a pulse generator which extends through a discharge end portion of the filling tube into contact with the packaging sheath causes the filling machine to be shut down in response to an absence of the packaging sheath during the filling operation,
**characterized in**
that the pulse generator senses the velocity of the packaging sheath and causes the filling machine to be shut down also in response to a standstill of the packaging sheath.

2. An apparatus for carrying out the process according to claim 1, comprising a filling tube (1), a gathered tubular packaging sheath (2) provided thereon, means for generating a filling pressure in the filling tube, and a pulse generator provided at the discharge end portion of the filling tube (1), which is operatively connected to the packaging sheath (2) and causes the filling machine to be shut down in response to an absence of the packaging sheath,
characterized by a smoothing disk (9) at the end portion of the filling tube and by a wheel (6) disposed behind the smoothing disk in direction of ejection, which wheel contacts the sheath and is rotated by the sheath (2) as the latter is advanced, and in the case of a standstill of the packaging sheath shuts down the filling machine via a pulse transmitted to the pulse generator (7).

3. The apparatus according to the generic part of claim 2,
characterized by a light barrier which senses marks on the packaging sheath (2) and in the case of a lack of movement of the marks shuts down the filling machine via a pulse.

## Revendications

1. Procédé de contrôle de l'opération de remplissage lors du remplissage d'enveloppes d'emballage en forme de boyau par de la matière de remplissage pâteuse, l'enveloppe d'emballage à remplir, fermée d'un côté, étant retirée d'un tuyau de remplissage par la pression de remplissage produite sur une machine de remplissage, et, en cas d'enveloppes d'emballage défectueuses pendant l'opération de remplissage, la machine de remplissage étant arrêtée par un générateur d'impulsions qui est en contact avec l'enveloppe d'emballage dans la zone d'extrémité du tuyau de remplissage située du côté de sortie, caractérisé en ce que le générateur d'impulsions détecte la vitesse de l'enveloppe d'emballage et en ce que la machine de remplissage est arrêtée aussi en cas d'immobilisation de l'enveloppe d'emballage.

2. Dispositif pour mettre en oeuvre le procédé suivant la revendication 1, comportant un tuyau (1) de remplissage, sur lequel est montée une enveloppe (2) d'emballage en forme de boyau plissé, comportant un dispositif pour produire une pression de remplissage dans le tuyau de remplissage et comportant un générateur d'impulsions qui est situé dans la zone d'extrémité de sortie du tuyau (1) de remplissage, qui est en liaison avec l'enveloppe (2) d'emballage et qui arrête la machine de remplissage en cas d'enveloppes d'emballage défectueuses, caractérisé par un disque (9) de déplissage dans la zone d'extrémité du tuyau de remplissage ainsi que par une roue (6) qui est montée en aval du disque de déplissage dans le sens d'expulsion, qui repose sur l'enveloppe, que l'avance de l'enveloppe (2) fait tourner et qui, en cas d'immobilisation de l'enveloppe d'emballage, arrête la machine de remplissage par l'intermédiaire d'une impulsion envoyée au récepteur (7) d'impulsions.

3. Dispositif suivant la préambule de la revendication 2, caractérisé par une cellule photoélectrique par laquelle des repères prévus sur l'enveloppe (2) d'emballage sont détectés et qui arrête la machine de remplissage par l'intermédiaire d'une impulsion lorsque les repères ne poursuivent pas leur déplacement.
